# EUROPÄISCHE PATENTSCHRIFT

(11) **EP 3 815 208 B1**
(45) Veröffentlichungstag und Bekanntmachung des Hinweises auf die Patenterteilung: **14.12.2022**
(21) Anmeldenummer: 18769079.7
(22) Anmeldetag: 30.08.2018
(51) Int. Cl.: H02J 1/14, H02J 3/36

(54) **SCHALTBARE LÄNGSSPANNUNGSQUELLE, GLEICHSTROMÜBERTRAGUNGSSYSTEM MIT LÄNGSSPANNUNGSQUELLE UND VERFAHREN ZUM BETREIBEN EINER LÄNGSSPANNUNGSQUELLE**
SWITCHABLE LONGITUDINAL VOLTAGE SOURCE, DC TRANSMISSION SYSTEM WITH LONGITUDINAL VOLTAGE SOURCE, AND METHOD FOR OPERATING A LONGITUDINAL VOLTAGE SOURCE
SOURCE DE TENSION LONGITUDINALE COMMUTABLE, SYSTÈME DE TRANSMISSION DE COURANT CONTINU POURVU DE LA SOURCE DE TENSION LONGITUDINALE ET PROCÉDÉ DESTINÉ À FAIRE FONCTIONNER UNE SOURCE DE TENSION LONGITUDINALE

(43) Veröffentlichungstag der Anmeldung: 05.05.2021
(73) Patentinhaber: Siemens Energy Global GmbH & Co. KG, 81739 München (DE)
(72) Erfinder: SCHÖN, Andre, 91058 Erlangen (DE); BAKRAN, Mark-Matthias, 91052 Erlangen (DE); HOFMANN, Viktor, 95448 Bayreuth (DE)
(86) Internationale Anmeldenummer: PCT/EP2018/073388
(87) Internationale Veröffentlichungsnummer: WO 2020/043297

(56) Entgegenhaltungen:
- US-A1- 2015 180 231
- US-A1- 2017 201 094

## Beschreibung

Die Erfindung bezieht sich auf eine schaltbare Längsspannungsquelle mit einem Einspeiseanschluss zum Einspeisen eines Stromes, einem ersten Ausgangsanschluss zum Anschließen einer ersten Ausgangsleitung und einem zweiten Ausgangsanschluss zum Anschließen einer zweiten Ausgangsleitung, wobei die Längsspannungsquelle geeignet ist, eine elektrische Spannung eines elektrischen Energiespeichers wahlweise zwischen den Einspeiseanschluss und den ersten Ausgangsanschluss oder zwischen den Einspeiseanschluss und den zweiten Ausgangsanschluss zu schalten.

Eine derartige Längsspannungsquelle ist aus der Druckschrift "Double modulation control (DMC) for dual full bridge current flow controller (2FB-CFC)" (Fainan Hassan, Rose King, Robert Whitehouse, Carl Barker; EPE'15 ECCE Europe, ISBN: 9789075815238 and CFP15850-USB) bekannt. Die vorbekannte Längsspannungsquelle weist insgesamt acht Halbleiterschalter auf, die jeweils unipolar schalten.

Aus der Offenlegungsschrift US 2017/201094 A1 ist eine Längsspannungsquelle bekannt, die ebenfalls acht Schalter aufweist. Mittels dieser Schalter kann ein Kondensator mit wählbarer Polarität in den Strompfad geschaltet werden. Die Druckschrift US 2015/180231 A1 offenbart eine Lastflussregelung mittels einer Längsspannungsquelle, wobei die Ausgänge der Lastflussregelung mittels einer Umpoleinrichtung vertauschbar sind.

Der Erfindung liegt die Aufgabe zugrunde, eine Anordnung mit einer schaltbaren Längsspannungsquelle anzugeben, die mit besonders wenigen Bauelementen auskommt.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist vorgesehen, dass die Längsspannungsquelle einen ersten Schalter aufweist, der elektrisch zwischen dem Einspeiseanschluss und dem ersten Ausgangsanschluss liegt, im eingeschalteten Zustand den Einspeiseanschluss und den ersten Ausgangsanschluss elektrisch verbindet und im ausgeschalteten Zustand den Einspeiseanschluss und den ersten Ausgangsanschluss elektrisch voneinander trennt, die Längsspannungsquelle einen zweiten Schalter aufweist, der elektrisch zwischen dem Einspeiseanschluss und dem zweiten Ausgangsanschluss liegt, im eingeschalteten Zustand den Einspeiseanschluss und den zweiten Ausgangsanschluss elektrisch verbindet und im ausgeschalteten Zustand den Einspeiseanschluss und den zweiten Ausgangsanschluss elektrisch voneinander trennt und die Längsspannungsquelle einen dritten Schalter aufweist, der elektrisch in Reihe mit dem Energiespeicher liegt und mit diesem eine Reihenschaltung bildet, die elektrisch zwischen die zwei Ausgangsanschlüsse geschaltet ist.

Ein wesentlicher Vorteil der erfindungsgemäßen Längsspannungsquelle ist darin zu sehen, dass diese mit lediglich drei Schaltern auskommt bzw. auskommen kann und dabei dennoch eine Verteilung von Strom bzw. eine Lastflussverteilung auf beispielsweise zwei nachgeordnete Hochspannungsgleichstromübertragungsleitungen eines Gleichspannungsübertragungssystems ermöglicht.

Die Längsspannungsquelle weist vorzugsweise eine Steuereinrichtung auf, die in einem ersten Betriebszustand den ersten und dritten Schalter eingeschaltet und den zweiten Schalter ausgeschaltet betreibt und damit den Energiespeicher zwischen den Einspeiseanschluss und den zweiten Ausgangsanschluss schaltet, in einem zweiten Betriebszustand den zweiten und dritten Schalter eingeschaltet und den ersten Schalter ausgeschaltet betreibt und damit den Energiespeicher zwischen den Einspeiseanschluss und den ersten Ausgangsanschluss schaltet, und in einem dritten Betriebszustand den ersten und zweiten Schalter eingeschaltet und den dritten Schalter ausgeschaltet betreibt und damit den Energiespeicher vom Einspeiseanschluss trennt.

Die Steuereinrichtung ist vorzugsweise derart ausgestaltet, dass sie einen Übergang vom ersten Betriebszustand in den zweiten Betriebszustand oder umgekehrt über den dritten Betriebszustand als Zwischenzustand durchführt.

Vorteilhaft ist es, wenn der erste, zweite und dritte Schalter bipolar schaltbar sind. Bei dieser Ausgestaltung ist eine Lastflussregelung in vorteilhafter Weise bidirektional möglich, also sowohl mit der Option einer Stromanhebung in Richtung des ersten Ausgangsanschlusses als auch mit der Option einer Stromanhebung in Richtung des zweiten Ausgangsanschlusses.

Alternativ kann vorgesehen sein, dass der erste, zweite und dritte Schalter lediglich unipolar schaltbare Schalter, insbesondere Halbleiterschalter, sind. In diesem Falle ist in der Regel die Lastflussregelung auf eine Richtung begrenzt, also nur unidirektional möglich, und zwar je nach elektrischer Anordnung der Schalter zur Stromanhebung in Richtung des ersten Ausgangsanschlusses oder zur Stromanhebung in Richtung des zweiten Ausgangsanschlusses.

Auch ist es möglich, dass der erste Schalter oder der zweite Schalter durch ein nichtsteuerbares Ventil, insbesondere allein durch eine Diode, gebildet ist. Dies setzt in der Regel voraus, dass der Energiespeicher stets auf eine vorgegebene Polarität vorgeladen ist, die der Flussrichtung des Ventils entgegengesetzt ist.

Die Erfindung bezieht sich auf eine Anordnung mit einer Längsspannungsquelle, wie oben beschrieben, und einer Umpoleinrichtung, die zwischen die zwei Ausgangsanschlüsse der Längsspannungsquelle und zwei Leiteranschlusskontakte der Umpoleinrichtung geschaltet ist. Ein Vorteil dieser Anordnung ist darin zu sehen, dass durch die nachgeordnete Umpoleinrichtung eine Lastflussregelung in bidirektionaler Richtung erreicht werden kann, indem die Umpoleinrichtung in die gewünschte Stellung gebracht wird, auch wenn die Längsspannungsquelle als solche einen Lastfluss nur unidirektional ermöglicht.

Die Umpoleinrichtung verbindet in einer ersten Stellung den ersten Ausgangsanschluss mit dem ersten Leiteranschlusskontakt und den zweiten Ausgangsanschluss mit dem zweiten Leiteranschlusskontakt. In einer zweiten Stellung verbindet die Umpoleinrichtung vorzugsweise den ersten Ausgangsanschluss mit dem zweiten Leiteranschlusskontakt und den zweiten Ausgangsanschluss mit dem ersten Leiteranschlusskontakt.

Die Umpoleinrichtung weist vorzugsweise mechanische Schalter auf oder wird vorzugsweise durch mechanische Schalter gebildet; mechanische Schalter sind im eingeschalteten Zustand vergleichsweise (verglichen zum Beispiel mit Halbleiterschaltern) verlustarm.

Die Umpoleinrichtung wird vorzugsweise durch vier Schalter gebildet.

Die Erfindung bezieht sich darüber hinaus auf ein Gleichstromübertragungssystem. Bezüglich eines solchen Gleichstromübertragungssystems ist erfindungsgemäß vorgesehen, dass dieses zumindest eine Längsspannungsquelle, wie oben beschrieben, sowie eine erste und eine zweite Hochspannungsgleichstromübertragungsleitung aufweist. Bezüglich der Vorteile des erfindungsgemäßen Gleichstromübertragungssystems sei auf die obigen Ausführungen im Zusammenhang mit der erfindungsgemäßen Längsspannungsquelle verwiesen.

Die Längsspannungsquelle ist vorzugsweise mit ihrem ersten Ausgangsanschluss an die erste Hochspannungsgleichstromübertragungsleitung und mit ihrem zweiten Ausgangsanschluss an die zweite Hochspannungsgleichstromübertragungsleitung angeschlossen.

Mit Blick auf die Möglichkeit einer bidirektionalen Lastflussregelung bei unidirektional arbeitenden Längsspannungsquellen wird es als vorteilhaft angesehen, wenn das Gleichstromübertragungssystem eine erste und eine zweite Längsspannungsquelle aufweist.

Die erste Längsspannungsquelle ist vorzugsweise mit ihrem ersten Ausgangsanschluss an die erste Hochspannungsgleichstromübertragungsleitung und mit ihrem zweiten Ausgangsanschluss an die zweite Hochspannungsgleichstromübertragungsleitung angeschlossen. Die zweite Längsspannungsquelle ist vorzugsweise mit ihrem ersten Ausgangsanschluss an die zweite Hochspannungsgleichstromübertragungsleitung und mit ihrem zweiten Ausgangsanschluss an die erste Hochspannungsgleichstromübertragungsleitung angeschlossen.

Jede der beiden Längsspannungsquellen ermöglicht vorzugsweise jeweils einen Betriebszustand, bei dem der erste, zweite und dritte Schalter der jeweiligen Längsspannungsquelle ausgeschaltet ist.

Jede der beiden Längsspannungsquellen weist vorzugsweise jeweils einen mit dem Eingangsanschluss in Reihe liegenden Betriebsschalter auf, der einen Stromfluss über den Eingangsanschluss blockieren kann.

Auch ist der Längsspannungsquelle in vorteilhafter Weise eine Umpoleinrichtung nachgeordnet, die zwischen die zwei Ausgangsanschlüsse der Längsspannungsquelle und zwei Leiteranschlusskontakte der Umpoleinrichtung geschaltet ist, wobei die Umpoleinrichtung in einer ersten Stellung den ersten Ausgangsanschluss mit dem ersten Leiteranschlusskontakt und den zweiten Ausgangsanschluss mit dem zweiten Leiteranschlusskontakt verbindet und wobei die Umpoleinrichtung in einer zweiten Stellung den ersten Ausgangsanschluss mit dem zweiten Leiteranschlusskontakt und den zweiten Ausgangsanschluss mit dem ersten Leiteranschlusskontakt verbindet, und die Längsspannungsquelle ist mit ihrem ersten Leiteranschlusskontakt an die erste Hochspannungsgleichstromübertragungsleitung und mit ihrem zweiten Leiteranschlusskontakt an die zweite Hochspannungsgleichstromübertragungsleitung angeschlossen.

Die Erfindung bezieht sich darüber hinaus auf ein Verfahren zum Betreiben einer Anordnung mit einer schaltbaren Längsspannungsquelle und einer Umpoleinrichtung. Erfindungsgemäß ist vorgesehen, dass als Längsspannungsquelle eine Längsspannungsquelle wie oben beschrieben betrieben wird und dass als Anordnung eine Anordnung wie oben beschrieben betrieben wird,
- wobei die Längsspannungsquelle zum Zwischenschalten des Energiespeichers zwischen den Einspeiseanschluss und den zweiten Ausgangsanschluss in einen ersten Betriebszustand geschaltet wird, bei dem der erste und dritte Schalter eingeschaltet werden und der zweite Schalter ausgeschaltet betrieben wird,
- wobei die Längsspannungsquelle zum Zwischenschalten des Energiespeichers zwischen den Einspeiseanschluss und den ersten Ausgangsanschluss in einen zweiten Betriebszustand geschaltet wird, bei dem der zweite und dritte Schalter eingeschaltet werden und der erste Schalter ausgeschaltet betrieben wird, und
- wobei die Längsspannungsquelle zum Trennen des Energiespeichers vom Einspeiseanschluss in einen dritten Betriebszustand geschaltet wird, bei dem der erste und zweite Schalter eingeschaltet und der dritte Schalter ausgeschaltet betrieben wird.

Bezüglich der Vorteile des erfindungsgemäßen Verfahrens sei auf die obigen Ausführungen im Zusammenhang mit der erfindungsgemäßen Längsspannungsquelle verwiesen.

Die Erfindung wird nachfolgend anhand von Ausführungsbeispielen näher erläutert; dabei zeigen beispielhaft
- Figur 1: ein Ausführungsbeispiel für ein erfindungsgemäßes Gleichstromübertragungssystem, das mit einem Ausführungsbeispiel für eine erfindungsgemäße Längsspannungsquelle ausgestattet ist,
- Figur 2: einen ersten Betriebszustand der Längsspannungsquelle gemäß Figur 1,
- Figur 3: einen zweiten Betriebszustand der Längsspannungsquelle gemäß Figur 1,
- Figur 4: einen dritten Betriebszustand der Längsspannungsquelle gemäß Figur 1,
- Figur 5: ein Ausführungsbeispiel für eine für das Gleichstromübertragungssystem gemäß Figur 1 geeignete Längsspannungsquelle näher im Detail,
- Figur 6: ein weiteres Ausführungsbeispiel für eine für das Gleichstromübertragungssystem gemäß Figur 1 geeignete Längsspannungsquelle näher im Detail,
- Figur 7: ein Ausführungsbeispiel für ein Gleichstromübertragungssystem, das mit einer Längsspannungsquelle gemäß Figur 5 und mit einer Längsspannungsquelle gemäß Figur 6 ausgestattet ist,
- Figur 8: ein Ausführungsbeispiel für ein Gleichstromübertragungssystem, bei dem einer Längsspannungsquelle eine Umpoleinrichtung nachgeordnet ist,
- Figur 9: eine Variante des Ausführungsbeispiels gemäß Figur 5, bei der einer der Schalter als nicht steuerbares Ventil in Form einer Diode ausgestattet ist, und
- Figur 10: eine Variante des Ausführungsbeispiels gemäß Figur 6, bei der einer der Schalter als nicht steuerbares Ventil in Form einer Diode ausgestattet ist.

In den Figuren werden der Übersicht halber für identische oder vergleichbare Komponenten stets dieselben Bezugszeichen verwendet.

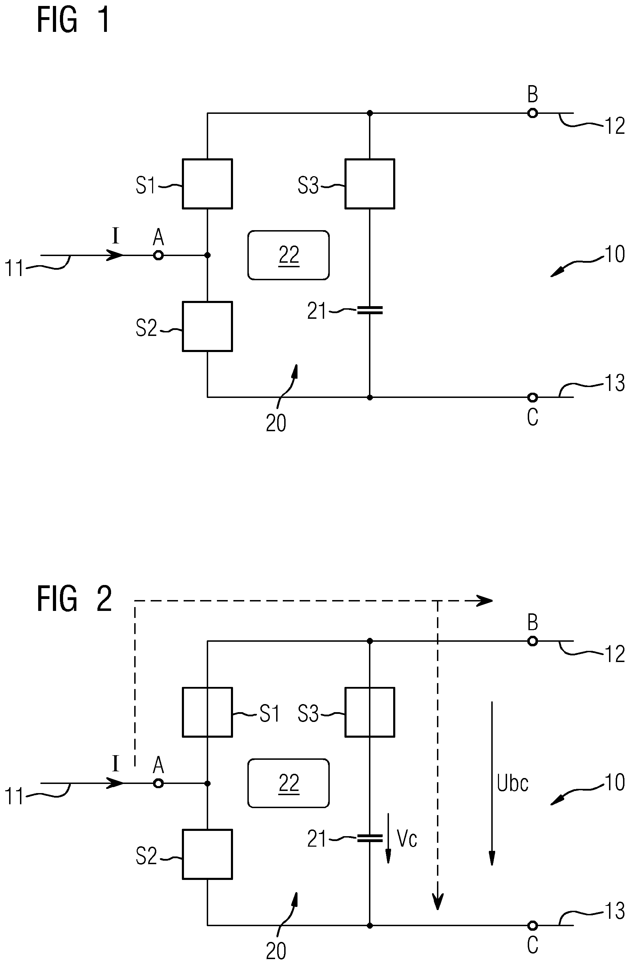

Die Figur 1 zeigt ein Gleichstromübertragungssystem 10, das mit einer Längsspannungsquelle 20 ausgestattet ist. Die Längsspannungsquelle weist einen ersten Schalter S1 auf, der elektrisch zwischen einen Einspeiseanschluss A und einen ersten Ausgangsanschluss B der Längsspannungsquelle 20 geschaltet ist. Im eingeschalteten Zustand verbindet sie elektrisch den Einspeiseanschluss A mit dem ersten Ausgangsanschluss B; im ausgeschalteten Zustand trennt sie den Einspeiseanschluss A und den ersten Ausgangsanschluss B elektrisch voneinander.

Die Längsspannungsquelle 20 umfasst darüber hinaus einen zweiten Schalter S2, der elektrisch zwischen dem Einspeiseanschluss A und an einem zweiten Ausgangsanschluss C liegt, im eingeschalteten Zustand den Einspeiseanschluss A und den zweiten Ausgangsanschluss C elektrisch verbindet und im ausgeschalteten Zustand den Einspeiseanschluss A und den zweiten Ausgangsanschluss C elektrisch voneinander trennt.

Ein dritter Schalter S3 der Längsspannungsquelle 20 liegt elektrisch in Reihe mit einem Energiespeicher 21 der Längsspannungsquelle 20 und bildet mit diesem eine Reihenschaltung, die elektrisch zwischen die zwei Ausgangsanschlüsse B und C der Längsspannungsquelle 20 geschaltet ist. Bei dem Energiespeicher 21 handelt es sich vorzugsweise um einen Kondensator.

Das Umschalten der Schalter S1, S2 und D3 und das Einstellen des jeweiligen Betriebszustands der Längsspannungsquelle 20 erfolgt durch eine Steuereinrichtung 22 der Längsspannungsquelle 20.

An den Einspeiseanschluss A der Längsspannungsquelle 20 ist eine Einspeiseleitung 11 des Gleichstromübertragungssystems 10 angeschlossen. Der erste Ausgangsanschluss B der Längsspannungsquelle 20 ist mit einer ersten Hochspannungsgleichstromübertragungsleitung 12 und der zweite Ausgangsanschluss C der Längsspannungsquelle 20 mit einer zweiten Hochspannungsgleichstromübertragungsleitung 13 verbunden.

Um eine gewünschte Strom- bzw. Lastverteilung des von der Einspeiseleitung 11 am Einspeiseanschluss A der Längsspannungsquelle 20 eingespeisten Eingangsstroms I auf die zwei Ausgangsanschlüsse B und C der Längsspannungsquelle 20 und damit eine korrespondierende Stromverteilung in den beiden Hochspannungsgleichstromübertragungsleitungen 12 und 13 zu erreichen, können die drei Schalter S1, S2 und S3 von der Steuereinrichtung 22 der Längsspannungsquelle 20 derart angesteuert werden, dass die zwischen den Ausgangsanschlüssen B und C bzw. die an dem Energiespeicher 21 anliegende Spannung wahlweise in einen ersten Strompfad zwischen dem Einspeiseanschluss A und dem ersten Ausgangsanschluss B oder in einen zweiten Strompfad zwischen dem Einspeiseanschluss A und dem zweiten Ausgangsanschluss C geschaltet wird; dies wird nachfolgend näher beispielhaft im Zusammenhang mit den Figuren 2 bis 4 erläutert:

Die Figur 2 zeigt einen ersten Betriebszustand der Längsspannungsquelle 20, bei dem der erste Schalter S1 und der dritte Schalter S3 eingeschaltet sind und der zweite Schalter S2 ausgeschaltet ist. Bei diesem Schaltzustand der drei Schalter S1, S2 und S3 wird die Spannung am Energiespeicher 21 bzw. die Spannung Ubc zwischen den Ausgangsanschlüssen B und C in den zweiten Strompfad zwischen dem Einspeiseanschluss A und dem zweiten Ausgangsanschluss C geschaltet, wohingegen der erste Strompfad zwischen dem Einspeiseanschluss A und dem ersten Ausgangsanschluss B an dem Energiespeicher 21 vorbeigeleitet wird.

Der Spannungsabfall zwischen dem Einspeiseanschluss A und dem ersten Ausgangsanschluss B ist somit - abgesehen von Spannungsverlusten der Schalter im eingeschalteten Zustand - null oder zumindest näherungsweise null, wohingegen der Spannungsabfall zwischen dem Einspeiseanschluss A und dem zweiten Ausgangsanschluss C durch die Spannung Vc am Energiespeicher 21 erhöht oder reduziert wird (je nach dem Vorzeichen der Spannung bzw. der Spannungsrichtung der Spannung am Energiespeicher 21). Je nach der Spannungsrichtung der am Energiespeicher 21 anliegenden Spannung Vc wird somit der Strom im zweiten Strompfad zwischen dem Einspeiseanschluss A und dem zweiten Ausgangsanschluss C gegenüber dem Strom im ersten Strompfad zwischen dem Einspeiseanschluss A und dem ersten Ausgangsanschluss B erhöht oder erniedrigt.

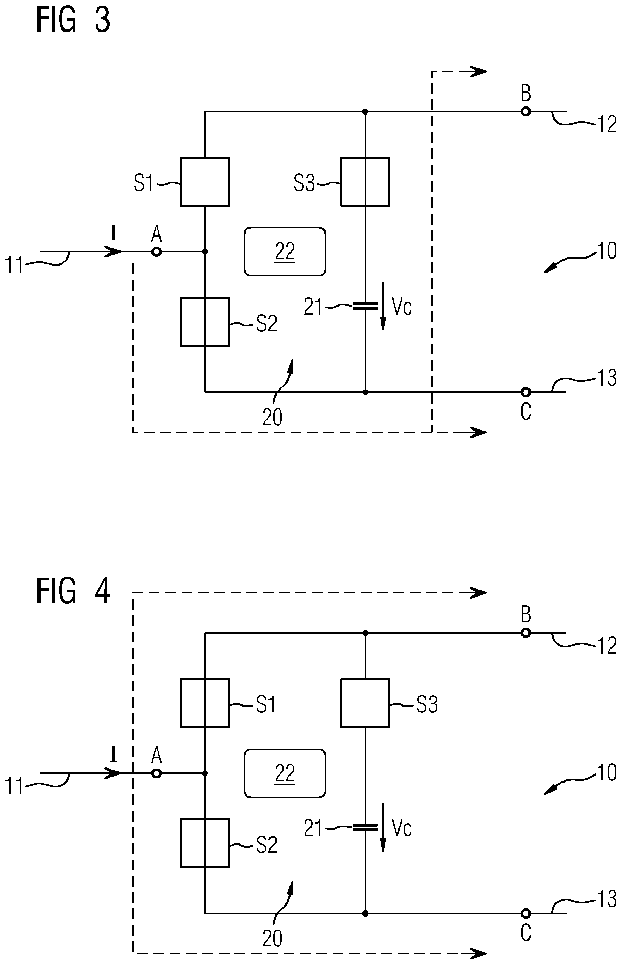

In einem zweiten Betriebszustand der Längsspannungsquelle 20 wird der Energiespeicher 21 in den ersten Strompfad zwischen dem Einspeiseanschluss A und dem ersten Ausgangsanschluss B der Längsspannungsquelle 20 geschaltet; der zweite Strompfad zwischen dem Einspeiseanschluss A und dem zweiten Ausgangsanschluss C wird hingegen an dem Energiespeicher 21 vorbeigeleitet. Um diesen Betriebszustand zu erreichen, werden der zweite Schalter S2 und der dritte Schalter S3 eingeschaltet und der erste Schalter S1 ausgeschaltet. Der zweite Betriebszustand ist in der Figur 3 gezeigt.

Der Spannungsabfall zwischen dem Einspeiseanschluss A und dem zweiten Ausgangsanschluss C ist somit - abgesehen von Spannungsverlusten der Schalter im eingeschalteten Zustand - null oder zumindest näherungsweise null, wohingegen der Spannungsabfall zwischen dem Einspeiseanschluss A und dem ersten Ausgangsanschluss B durch die Spannung Vc am Energiespeicher 21 erhöht oder reduziert wird (je nach dem Vorzeichen der Spannung bzw. der Spannungsrichtung der Spannung am Energiespeicher 21). Je nach der Spannungsrichtung der am Energiespeicher 21 anliegenden Spannung Vc wird somit der Strom im ersten Strompfad zwischen dem Einspeiseanschluss A und dem ersten Ausgangsanschluss B gegenüber dem Strom im zweiten Strompfad zwischen dem Einspeiseanschluss A und dem zweiten Ausgangsanschluss C erhöht oder erniedrigt.

Die Figur 4 zeigt einen dritten Betriebszustand der Längsspannungsquelle 20, bei dem der erste Schalter S1 und der zweite Schalter S2 eingeschaltet sind und der dritte Schalter S3 ausgeschaltet ist. In diesem dritten Betriebszustand bleibt der Energiespeicher 21 elektrisch abgetrennt, so dass die an dem Energiespeicher 21 anliegende Spannung Vc weder auf den ersten Strompfad zwischen dem Einspeiseanschluss A und dem ersten Ausgangsanschluss B noch auf den zweiten Strompfad zwischen dem Einspeiseanschluss A und dem zweiten Ausgangsanschluss C einwirkt.

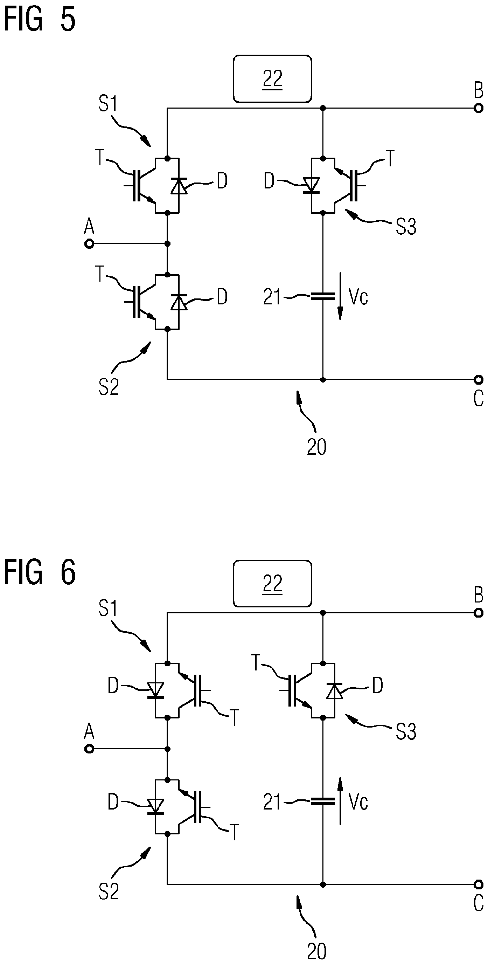

Die Figur 5 zeigt ein Ausführungsbeispiel für den Aufbau einer Längsspannungsquelle 20, die bei dem Gleichstromübertragungssystem 10 gemäß den Figuren 1 bis 4 eingesetzt werden kann. Bei den drei Schaltern S1, S2 und S3 handelt es sich um von außen schaltbare Halbleiterschalter. Es lässt sich erkennen, dass die drei Schalter S1, S2 und S3 jeweils durch einen Transistor T, der von der Steuereinrichtung 22 gemäß den Figuren 1 bis 4 angesteuert wird, und eine dazu antiparallel geschaltete Diode D gebildet ist. Jeder der drei Schalter S1, S2 und S3 ist somit von der Steuereinrichtung 22 nur in unipolarer Richtung ein- und ausschaltbar; in der entgegengesetzten Stromrichtung bildet die Diode D jeweils einen Freilauf.

Durch die in der Figur 5 gezeigte Verschaltung der Dioden D und der Transistoren T ergibt sich, dass eine Lastflussregelung nur in einer Richtung, also unidirektional, möglich ist; denn der Energiespeicher 21 sollte stets mit einer positiven Spannung Vc in der in der Figur 5 gezeigten Spannungsrichtung betrieben werden, um zu vermeiden, dass es im dritten Betriebszustand zu einem Kurzschluss des Energiespeichers 21 über die Freilaufdiode D des zweiten Schalters S2 kommen kann.

Zur Vorbereitung des Betriebs der Längsspannungsquelle 20 wird die Steuereinrichtung 22 die Spannung Vc am Energiespeicher 20 zunächst auf einen gewünschten Ausgangswert von beispielsweise + 2 kV stellen.

Tritt anschließend während des Betriebs des Gleichstromübertragungssystems 10 die Situation auf, dass die Stromverteilung in Richtung des ersten Ausgangsanschlusses B und des zweiten Ausgangsanschlusses C unsymmetrisch ist und der Lastfluss im zweiten Strompfad stets größer als im ersten Strompfad ist, so kann durch ein temporäres, abwechselndes Einschalten (beispielsweise im Rahmen einer Pulsweitenmodulation) des ersten und zweiten Betriebszustands der Energiespeicher in negativer Spannungsrichtung in den ersten Strompfad oder in positiver Spannungsrichtung in den zweiten Strompfad geschaltet werden, wodurch es in beiden Fällen jeweils zu einem Verschieben des Lastflusses von dem zweiten Strompfad in Richtung des ersten Strompfades kommt. Da der Energiespeicher im ersten Betriebszustand aufgeladen wird und im zweiten entladen wird, kann bei gleichen oder zumindest annähernd gleichen Zeitdauern für den ersten und zweiten Betriebszustand im Rahmen der Pulsweitenmodulation der Ladezustand des Energiespeichers 21 konstant gehalten werden.

Die Länge der ersten und zweiten Betriebszustände (sowie die Länge des jeweils dazwischen liegenden dritten Betriebszustands) und die Arbeitsspannungshöhe des Energiespeichers bestimmen das Ausmaß der Lastflussänderung bzw. der Lastflussverschiebung zugunsten des ersten Strompfads.

Die Figur 6 zeigt ein zweites Ausführungsbeispiel für eine Längsspannungsquelle 20, die bei dem Gleichstromübertragungssystem 10 gemäß den Figuren 1 bis 4 eingesetzt werden kann. In Übereinstimmung mit dem Ausführungsbeispiel gemäß Figur 5 sind die Schalter S1, S2 und S3 jeweils unipolar schaltbar und werden jeweils durch einen Transistor T und eine antiparallel geschaltete Diode D gebildet. Aufgrund der Polarität der Freilaufdiode des dritten Schalters S3 wird der Energiespeicher 21 von der Steuereinrichtung 22 mit einer positiven Spannung Vc in entgegengesetzter Spannungsrichtung (verglichen mit Figur 5) beaufschlagt, wie dies in der Figur 6 dargestellt ist.

Aufgrund der Spannungsrichtung des Energiespeichers 21 kann bei der Längsspannungsquelle 20 gemäß Figur 6 eine Lastflussregelung - verglichen mit der Figur 5 - in umgekehrter Richtung erfolgen:
Zur Vorbereitung des Betriebs der Längsspannungsquelle 20 wird die Steuereinrichtung die Spannung Vc am Energiespeicher 20 zunächst auf einen gewünschten Ausgangswert von beispielsweise wieder + 2 kV stellen.

Tritt während des Betriebs des Gleichstromübertragungssystems 10 gemäß Figur 6 die Situation auf, dass der Lastfluss im ersten Strompfad stets größer ist als im zweiten Strompfad, so kann durch ein temporäres, abwechselndes Einschalten (beispielsweise im Rahmen einer Pulsweitenmodulation) des ersten und zweiten Betriebszustands der Energiespeicher 21 in positiver Spannungsrichtung in den ersten Strompfad oder in negativer Spannungsrichtung in den zweiten Strompfad geschaltet werden, wodurch es in beiden Fällen jeweils zu einem Verschieben des Lastflusses von dem ersten Strompfad in Richtung des zweiten Strompfades kommt. Da der Energiespeicher im ersten Betriebszustand entladen wird und im zweiten geladen wird, kann bei gleicher oder zumindest annähernd gleichen Zeitdauern für den ersten und zweiten Betriebszustand im Rahmen der Pulsweitenmodulation der Ladezustand des Energiespeichers 21 konstant gehalten werden.

Die Länge der ersten und zweiten Betriebszustände, die Länge des jeweils dazwischen liegenden dritten Betriebszustands und die Arbeitsspannungshöhe des Energiespeichers bestimmen auch hier das Ausmaß der Lastflussänderung bzw. der Lastflussverschiebung zugunsten des zweiten Strompfads; diesbezüglich gelten die Erläuterungen im Zusammenhang mit der Figur 5 beim Ausführungsbeispiel gemäß Figur 6 analog.

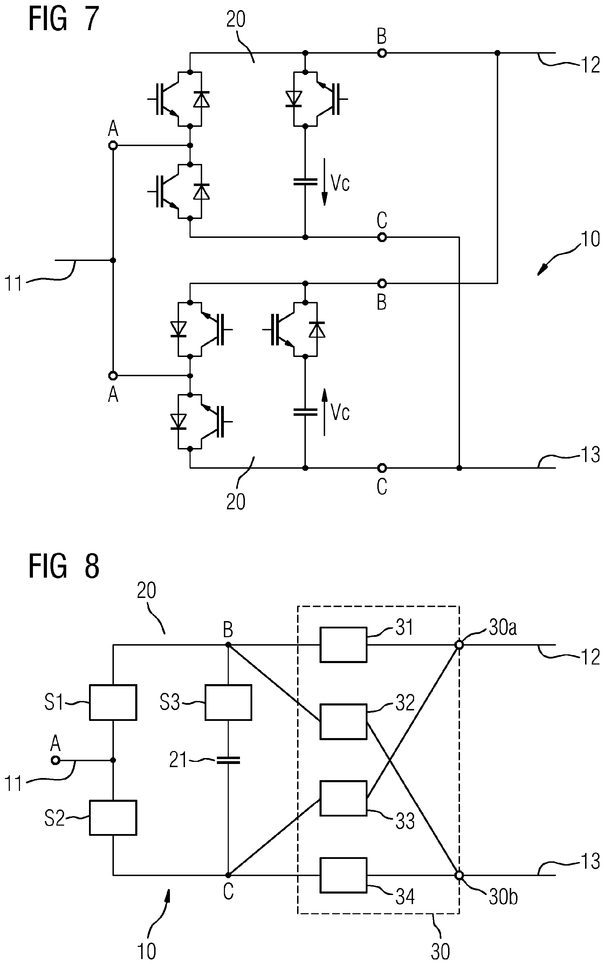

Die Figur 7 zeigt ein Ausführungsbeispiel für ein Gleichstromübertragungssystem 10, bei dem die Längsspannungsquelle 20 gemäß Figur 5 und die Längsspannungsquelle 20 gemäß Figur 6 parallel geschaltet sind. Je nach der Lastflusssituation und der gewünschten Lastflussrichtung kann im Rahmen einer Lastflussregelung entweder die in der Figur 7 obere Längsspannungsquelle 20, also die Längsspannungsquelle gemäß Figur 5, oder die in der Figur 7 untere Längsspannungsquelle 20, also die Längsspannungsquelle gemäß Figur 6, zur aktiven Lastflussregelung verwendet werden; die jeweils andere Längsspannungsquelle bleibt dann abgeschaltet bzw. inaktiv. Die inaktive Längsspannungsquelle 20 wird zu diesem Zweck vorzugsweise in den oben beschriebenen dritten Betriebszustand geschaltet, bei dem alle drei Schalter S1, S2 und S3 jeweils abgeschaltet sind.

Die aktive Längsspannungsquelle 20 wird abwechselnd in den ersten Betriebszustand oder in den zweiten Betriebszustand geschaltet, um die gewünschte Lastflussregelung im gewünschten Umfange zu erzielen, wie dies im Zusammenhang mit den Figuren 1 bis 6 oben erläutert worden ist.

Die Figur 8 zeigt ein Ausführungsbeispiel für ein Gleichstromübertragungssystem 10, bei dem einer Längsspannungsquelle 20 eine Umpoleinrichtung 30 nachgeordnet ist. Die Umpoleinrichtung 30 liegt elektrisch zwischen den beiden Ausgangsanschlüssen B und C der Längsspannungsquelle 20 und den beiden Hochspannungsgleichstromübertragungsleitungen 12 und 13 des Gleichstromübertragungssystems 10.

Die Umpoleinrichtung 30 gemäß Figur 8 weist vier Schalter 31, 32, 33 und 34 auf, die in einer ersten Stellung den ersten Ausgangsanschluss B der Längsspannungsquelle 20 mit dem ersten Leiteranschlusskontakt 30a der Umpoleinrichtung 30 und damit mit der ersten Hochspannungsgleichstromübertragungsleitung 12 und den zweiten Ausgangsanschluss C der Längsspannungsquelle 20 mit einem zweiten Leiteranschlusskontakt 30b der Umpoleinrichtung 30 und damit mit der zweiten Hochspannungsgleichstromübertragungsleitung 13 des Gleichstromübertragungssystems 10 verbindet.

In einer inversen bzw. zweiten Stellung der Umpoleinrichtung 30 wird der erste Ausgangsanschluss A der Längsspannungsquelle 20 mit dem zweiten Leiteranschlusskontakt 30b der Umpoleinrichtung 30 und damit mit der zweiten Hochspannungsgleichstromübertragungsleitung 13 des Gleichstromübertragungssystems 10 und der zweite Ausgangsanschluss C der Längsspannungsquelle 20 mit dem ersten Leiteranschlusskontakt 30a der Umpoleinrichtung 30 bzw. mit der ersten Hochspannungsgleichstromübertragungsleitung 12 verbunden.

Die Umpoleinrichtung ermöglicht mit nur einer unidirektional arbeitenden Längsspannungsquelle 20 eine bidirektionale Lastflussregelung, wobei durch Auswahl der ersten oder zweiten Stellung der Umpoleinrichtung die Lastflussrichtung eingestellt wird.

Mit Blick auf minimale elektrische Verluste wird es als vorteilhaft angesehen, wenn die vier Schalter 31, 32, 33 und 34 der Umpoleinrichtung 30 mechanische Schalter sind, da diese im durchgeschalteten Zustand sehr geringe elektrische Verluste verursachen, zumindest weniger als Halbleiterschalter, wie sie im Zusammenhang mit den Figuren 4 und 5 gezeigt sind.

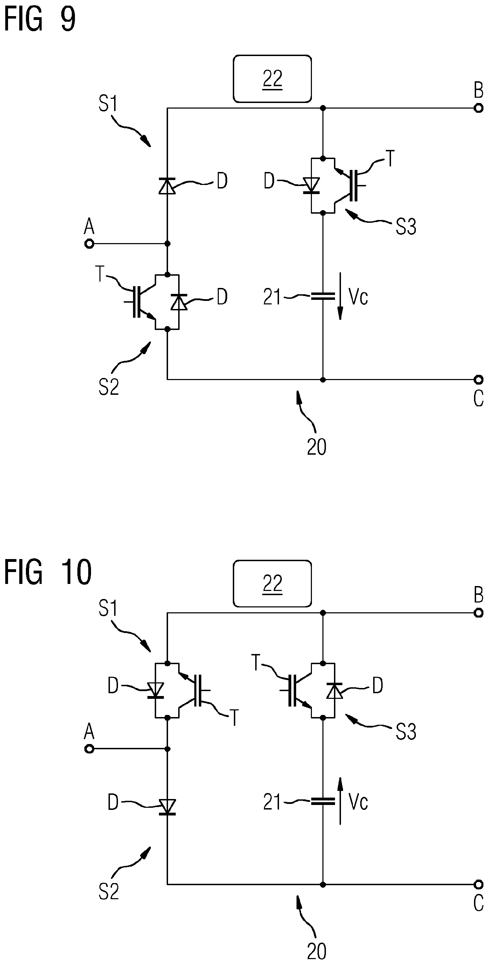

Die Figur 9 zeigt eine Ausführungsvariante für die Längsspannungsquelle 20 gemäß Figur 5. Es lässt sich erkennen, dass die Längsspannungsquelle 20 gemäß Figur 9 als ersten Schalter S1 lediglich ein nicht steuerbares Ventil in Form einer Diode D aufweist; an einem parallel geschalteten Transistor fehlt es im Unterschied zum Ausführungsbeispiel gemäß Figur 5. Der parallel geschaltete Transistor kann bei dem ersten Schalter S1 bei der Längsspannungsquelle 20 gemäß Figur 5 entfallen, da im zweiten Betriebszustand, bei dem der zweite Schalter S2 und der dritte Schalter S3 durchgeschaltet sind, die an dem Energiespeicher 21 anliegende Spannung Vc stets - in Sperrrichtung - parallel zur Diode D des ersten Schalters S1 liegt und diese damit sperrt.

Im Übrigen gelten die Erläuterungen im Zusammenhang mit der Figur 5 für die Variante gemäß Figur 9 entsprechend.

Die Figur 10 zeigt eine Ausführungsvariante für die Längsspannungsquelle 20 gemäß Figur 6. Es lässt sich erkennen, dass die Längsspannungsquelle 20 gemäß Figur 10 als zweiten Schalter S2 lediglich ein nicht steuerbares Ventil in Form einer Diode D aufweist; an einem parallel geschalteten Transistor fehlt es im Unterschied zum Ausführungsbeispiel gemäß Figur 6. Der parallel geschaltete Transistor kann bei dem zweiten Schalter S2 bei der Längsspannungsquelle 20 gemäß Figur 6 entfallen, da im ersten Betriebszustand, bei dem der erste Schalter S1 und der dritte Schalter S3 durchgeschaltet sind, die an dem Energiespeicher 21 anliegende Spannung Vc stets - in Sperrrichtung - parallel zur Diode D des zweiten Schalters S2 liegt und diese damit sperrt.

Im Übrigen gelten die Erläuterungen im Zusammenhang mit der Figur 6 für die Variante gemäß Figur 10 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Gleichstromübertragungssystem
- 11: Einspeiseleitung
- 12: Hochspannungsgleichstromübertragungsleitung
- 13: Hochspannungsgleichstromübertragungsleitung
- 20: Längsspannungsquelle
- 21: Energiespeicher
- 22: Steuereinrichtung
- 30: Umpoleinrichtung
- 30a: Leiteranschlusskontakt
- 30b: Leiteranschlusskontakt
- 31: Schalter
- 32: Schalter
- 33: Schalter
- 34: Schalter

- A: Einspeiseanschluss
- B: Ausgangsanschluss
- C: Ausgangsanschluss
- D: Diode
- S1: Schalter
- S2: Schalter
- S3: Schalter
- T: Transistor
- Ubc: Spannung
- Vc: Spannung

## Patentansprüche

1. Anordnung mit einer schaltbaren Längsspannungsquelle (20) und einer Umpoleinrichtung (30), wobei die Längsspannungsquelle (20) einen Einspeiseanschluss (A) zum Einspeisen eines Stromes, einen ersten Ausgangsanschluss (B) und einen zweiten Ausgangsanschluss (C) aufweist, wobei die Längsspannungsquelle (20) geeignet ist, eine elektrische Spannung eines elektrischen Energiespeichers (21) wahlweise zwischen den Einspeiseanschluss (A) und den ersten Ausgangsanschluss (B) oder zwischen den Einspeiseanschluss (A) und den zweiten Ausgangsanschluss (C) zu schalten, wobei
- die Längsspannungsquelle (20) einen ersten Schalter (S1) aufweist, der elektrisch zwischen dem Einspeiseanschluss (A) und dem ersten Ausgangsanschluss (B) liegt, im eingeschalteten Zustand den Einspeiseanschluss (A) und den ersten Ausgangsanschluss (B) elektrisch verbindet und im ausgeschalteten Zustand den Einspeiseanschluss (A) und den ersten Ausgangsanschluss (B) elektrisch voneinander trennt,
- die Längsspannungsquelle (20) einen zweiten Schalter (S2) aufweist, der elektrisch zwischen dem Einspeiseanschluss (A) und dem zweiten Ausgangsanschluss (C) liegt, im eingeschalteten Zustand den Einspeiseanschluss (A) und den zweiten Ausgangsanschluss (C) elektrisch verbindet und im ausgeschalteten Zustand den Einspeiseanschluss (A) und den zweiten Ausgangsanschluss (C) elektrisch voneinander trennt,
- die Längsspannungsquelle (20) einen dritten Schalter (S3) aufweist, der elektrisch in Reihe mit dem Energiespeicher (21) liegt und mit diesem eine Reihenschaltung bildet, die elektrisch zwischen die zwei Ausgangsanschlüsse (B, C) geschaltet ist, und
- die Umpoleinrichtung (30) zwischen die zwei Ausgangsanschlüsse (B, C) der Längsspannungsquelle (20) und zwei Leiteranschlusskontakte (30a, 30b) der Umpoleinrichtung (30) geschaltet ist, wobei die Umpoleinrichtung (30) in einer ersten Stellung den ersten Ausgangsanschluss (B) mit dem ersten Leiteranschlusskontakt (30a) und den zweiten Ausgangsanschluss (C) mit dem zweiten Leiteranschlusskontakt (30b) verbindet und wobei die Umpoleinrichtung (30) in einer zweiten Stellung den ersten Ausgangsanschluss (B) mit dem zweiten Leiteranschlusskontakt (30b) und den zweiten Ausgangsanschluss (C) mit dem ersten Leiteranschlusskontakt (30a) verbindet.

2. Anordnung nach Anspruch 1,
**dadurch gekennzeichnet, dass** die Längsspannungsquelle (20) eine Steuereinrichtung (22) aufweist, die
- in einem ersten Betriebszustand den ersten und dritten Schalter (S1, S3) eingeschaltet und den zweiten Schalter (S2) ausgeschaltet betreibt und damit den Energiespeicher (21) zwischen den Einspeiseanschluss (A) und den zweiten Ausgangsanschluss (C) schaltet,
- in einem zweiten Betriebszustand den zweiten und dritten Schalter (S2, S3) eingeschaltet und den ersten Schalter (S1) ausgeschaltet betreibt und damit den Energiespeicher (21) zwischen den Einspeiseanschluss (A) und den ersten Ausgangsanschluss (B) schaltet, und
- in einem dritten Betriebszustand den ersten und zweiten Schalter (S1, S2) eingeschaltet und den dritten Schalter (S3) ausgeschaltet betreibt und damit den Energiespeicher (21) vom Einspeiseanschluss (A) trennt.

3. Anordnung nach Anspruch 2,
**dadurch gekennzeichnet, dass**
die Steuereinrichtung (22) derart ausgestaltet ist, dass sie einen Übergang vom ersten Betriebszustand in den zweiten Betriebszustand oder umgekehrt mit dem dritten Betriebszustand als Zwischenzustand durchführt.

4. Anordnung nach einem der voranstehenden Ansprüche,
**dadurch gekennzeichnet, dass**
der erste, zweite und dritte Schalter (S1, S2, S3) unipolar schaltbare Halbleiterschalter sind.

5. Anordnung nach einem der voranstehenden Ansprüche,
**dadurch gekennzeichnet, dass**
der erste, zweite und dritte Schalter (S1, S2, S3) bipolar schaltbare Halbleiterschalter sind.

6. Anordnung nach einem der voranstehenden Ansprüche,
**dadurch gekennzeichnet, dass**
der erste Schalter (S1) oder der zweite Schalter (S2) durch ein nichtsteuerbares Ventil, insbesondere allein durch eine Diode (D), gebildet ist.

7. Anordnung nach einem der voranstehenden Ansprüche,
**dadurch gekennzeichnet, dass**
die Umpoleinrichtung (30) mechanische Schalter (31-34) aufweist oder durch mechanische Schalter (31-34) gebildet ist.

8. Gleichstromübertragungssystem (10),
**dadurch gekennzeichnet, dass**
dieses zumindest eine Anordnung nach einem der voranstehenden Ansprüche sowie eine erste und eine zweite Hochspannungsgleichstromübertragungsleitung (12, 13) aufweist.

9. Gleichstromübertragungssystem (10) nach Anspruch 8,
**dadurch gekennzeichnet, dass**
- die Längsspannungsquelle (20) mit ihrem ersten Ausgangsanschluss (B) an die erste Hochspannungsgleichstromübertragungsleitung (12) und mit ihrem zweiten Ausgangsanschluss (C) an die zweite Hochspannungsgleichstromübertragungsleitung (13) angeschlossen ist.

10. Gleichstromübertragungssystem (10) nach Anspruch 8 oder 9,
**dadurch gekennzeichnet, dass**
- das Gleichstromübertragungssystem (10) eine erste und eine zweite Längsspannungsquelle (20) aufweist,
- die erste Längsspannungsquelle (20) mit ihrem ersten Ausgangsanschluss (B) an die erste Hochspannungsgleichstromübertragungsleitung (12) und mit ihrem zweiten Ausgangsanschluss (C) an die zweite Hochspannungsgleichstromübertragungsleitung (13) angeschlossen ist und
- die zweite Längsspannungsquelle (20) mit ihrem ersten Ausgangsanschluss (B) an die zweite Hochspannungsgleichstromübertragungsleitung (13) und mit ihrem zweiten Ausgangsanschluss (C) an die erste Hochspannungsgleichstromübertragungsleitung (12) angeschlossen ist.

11. Gleichstromübertragungssystem (10) nach Anspruch 10,
**dadurch gekennzeichnet, dass**
jede der beiden Längsspannungsquellen (20) jeweils einen Betriebszustand ermöglicht, bei dem der erste, zweite und dritte Schalter (S1-S3) der jeweiligen Längsspannungsquelle (20) ausgeschaltet ist.

12. Gleichstromübertragungssystem (10) nach Anspruch 10 oder 11,
**dadurch gekennzeichnet, dass**
jede der beiden Längsspannungsquellen (20) jeweils einen mit dem Eingangsanschluss in Reihe liegenden Betriebsschalter aufweist, der einen Stromfluss über den Eingangsanschluss blockieren kann.

13. Gleichstromübertragungssystem (10) nach einem der voranstehenden Ansprüche 8 bis 12,
**dadurch gekennzeichnet, dass**
die Längsspannungsquelle (20) mit ihrem ersten Leiteranschlusskontakt (30a) an die erste Hochspannungsgleichstromübertragungsleitung (12) und mit ihrem zweiten Leiteranschlusskontakt (30b) an die zweite Hochspannungsgleichstromübertragungsleitung (13) angeschlossen ist.

14. Verfahren zum Betreiben einer Anordnung mit einer schaltbaren Längsspannungsquelle (20) und einer Umpoleinrichtung (30), wobei
als Anordnung eine Anordnung mit den Merkmalen gemäß einem der Patentansprüche 1 bis 7 betrieben wird,
- wobei die Längsspannungsquelle (20) zum Zwischenschalten des Energiespeichers (21) zwischen den Einspeiseanschluss (A) und den zweiten Ausgangsanschluss (C) in einen ersten Betriebszustand geschaltet wird, bei dem der erste und dritte Schalter (S1, S3) eingeschaltet werden und der zweite Schalter (S2) ausgeschaltet betrieben wird,
- wobei die Längsspannungsquelle (20) zum Zwischenschalten des Energiespeichers (21) zwischen den Einspeiseanschluss (A) und den ersten Ausgangsanschluss (B) in einen zweiten Betriebszustand geschaltet wird, bei dem der zweite und dritte Schalter (S2, S3) eingeschaltet werden und der erste Schalter (S1) ausgeschaltet betrieben wird, und
- wobei die Längsspannungsquelle (20) zum Trennen des Energiespeichers (21) vom Einspeiseanschluss (A) in einen dritten Betriebszustand geschaltet wird, bei dem der erste und zweite Schalter (S1, S2) eingeschaltet und der dritte Schalter (S3) ausgeschaltet betrieben wird.

## Claims

1. Arrangement comprising a switchable longitudinal voltage source (20) and a polarity reversal device (30), wherein the longitudinal voltage source (20) has a feed-in terminal (A) for feeding in a current, a first output terminal (B) and a second output terminal (C), wherein the longitudinal voltage source (20) is suitable for optionally switching an electrical voltage of an electrical energy store (21) between the feed-in terminal (A) and the first output terminal (B) or between the feed-in terminal (A) and the second output terminal (C), wherein
- the longitudinal voltage source (20) has a first switch (S1), which is situated electrically between the feed-in terminal (A) and the first output terminal (B), electrically connects the feed-in terminal (A) and the first output terminal (B) in the switched-on state and electrically disconnects the feed-in terminal (A) and the first output terminal (B) from one another in the switched-off state,
- the longitudinal voltage source (20) has a second switch (S2), which is situated electrically between the feed-in terminal (A) and the second output terminal (C), electrically connects the feed-in terminal (A) and the second output terminal (C) in the switched-on state and electrically disconnects the feed-in terminal (A) and the second output terminal (C) from one another in the switched-off state,
- the longitudinal voltage source (20) has a third swich (S3), which is situated electrically in series with the energy store (21) and forms a series circuit therewith, said series circuit being electrically connected between the two output terminals (B, C), and
- the polarity reversal device (30) is connected between the two output terminals (B, C) of the longitudinal voltage source (20) and two conductor terminal contacts (30a, 30b) of the polarity reversal device (30), wherein in a first position the polarity reversal device (30) connects the first output terminal (B) to the first conductor terminal contact (30a) and the second output terminal (C) to the second conductor terminal contact (30b), and wherein in a second position the polarity reversal device (30) connects the first output terminal (B) to the second conductor terminal contact (30b) and the second output terminal (C) to the first conductor terminal contact (30a).

2. Arrangement according to Claim 1,
**characterized in that**
the longitudinal voltage source (20) has a control device (22), which
- in a first operating state operates the first and third switches (S1, S3) switched on and the second switch (S2) switched off and thus connects the energy store (21) between the feed-in terminal (A) and the second output terminal (C),
- in a second operating state operates the second and third switches (S2, S3) switched on and the first switch (S1) switched off and thus connects the energy store (21) between the feed-in terminal (A) and the first output terminal (B), and
- in a third operating state operates the first and second switches (S1, S2) switched on and the third switch (S3) switched off and thus disconnects the energy store (21) from the feed-in terminal (A).

3. Arrangement according to Claim 2,
**characterized in that**
the control device (22) is configured in such a way that it carries out a transition from the first operating state to the second operating state, or vice versa, with the third operating state as an intermediate state.

4. Arrangement according to any of the preceding claims,
**characterized in that**
the first, second and third switches (S1, S2, S3) are unipolar switchable semiconductor switches.

5. Arrangement according to any of the preceding claims,
**characterized in that**
the first, second and third switches (S1, S2, S3) are bipolar switchable semiconductor switches.

6. Arrangement according to any of the preceding claims,
**characterized in that**
the first switch (S1) or the second switch (S2) is formed by a non-controllable valve, in particular solely by a diode (D).

7. Arrangement according to any of the preceding claims,
**characterized in that**
the polarity reversal device (30) has mechanical switches (31-34) or is formed by mechanical switches (31-34).

8. DC transmission system (10),
**characterized in that**
this system has at least one arrangement according to any of the preceding claims and also a first and a second high-voltage DC transmission line (12, 13).

9. DC transmission system (10) according to Claim 8,
**characterized in that**
- the longitudinal voltage source (20) is connected by its first output terminal (B) to the first high-voltage DC transmission line (12) and by its second output terminal (C) to the second high-voltage DC transmission line (13).

10. DC transmission system (10) according to Claim 8 or 9,
**characterized in that**
- the DC transmission system (10) has a first and a second longitudinal voltage source (20),
- the first longitudinal voltage source (20) is connected by its first output terminal (B) to the first high-voltage DC transmission line (12) and by its second output terminal (C) to the second high-voltage DC transmission line (13), and
- the second longitudinal voltage source (20) is connected by its first output terminal (B) to the second high-voltage DC transmission line (13) and by its second output terminal (C) to the first high-voltage DC transmission line (12).

11. DC transmission system (10) according to Claim 10,
**characterized in that**
each of the two longitudinal voltage sources (20) in each case enables an operating state in which the first, second and third switches (S1-S3) of the respective longitudinal voltage source (20) are switched off.

12. DC transmission system (10) according to Claim 10 or 11,
**characterized in that**
each of the two longitudinal voltage sources (20) in each case has an operating switch which is situated in series with the input terminal and which can block a current flow via the input terminal.

13. DC transmission system (10) according to any of the preceding Claims 8 to 12,
**characterized in that**
the longitudinal voltage source (20) is connected by its first conductor terminal contact (30a) to the first high-voltage DC transmission line (12) and by its second conductor terminal contact (30b) to the second high-voltage DC transmission line (13) .

14. Method for operating an arrangement comprising a switchable longitudinal voltage source (20) and a polarity reversal device (30), wherein
an arrangement having the features according to any of Patent Claims 1 to 7 is operated as arrangement,
- wherein the longitudinal voltage source (20) for the purpose of interposing the energy store (21) between the feed-in terminal (A) and the second output terminal (C), is switched into a first operating state, in which the first and third switches (S1, S3) are switched on and the second switch (S2) is operated switched off,
- wherein the longitudinal voltage source (20), for the purpose of interposing the energy store (21) between the feed-in terminal (A) and the first output terminal (B), is switched into a second operating state, in which the second and third switches (S2, S3) are switched on and the first switch (S1) is operated switched off, and
- wherein the longitudinal voltage source (20), for the purpose of disconnecting the energy store (21) from the feed-in terminal (A), is switched into a third operating state, in which the first and second switches (S1, S2) are operated switched on and the third switch (S3) is operated switched off.

## Revendications

1. Montage comprenant une source (20) de tension longitudinale commutable et un dispositif (30) d'inversion de polarité, dans lequel la source (20) de tension longitudinale a une borne (A) d'injection pour l'injection d'un courant, une première borne (B) de sortie et une deuxième borne (C) de sortie, dans lequel la source (20) de tension longitudinale est propre à appliquer une tension électrique d'un accumulateur (21) d'énergie électrique au choix entre la borne (A) d'injection et la première borne (B) de sortie ou entre la borne (A) d'injection et la deuxième borne (C) de sortie, dans lequel
- la source (20) de tension longitudinale a un premier interrupteur (S1), qui est monté électriquement entre la borne (A) d'injection et la première borne (B) de sortie, qui, dans l'état fermé, relie électriquement la borne (A) d'injection et la première borne (B) de sortie et qui, dans l'état ouvert, sépare électriquement l'une de l'autre la borne (A) d'injection et la première borne (B) de sortie,
- la source (20) de tension longitudinale a un deuxième interrupteur (S2), qui est monté électriquement entre la borne (A) d'injection et la deuxième borne (C) de sortie, qui, dans l'état fermé, relie électriquement la borne (A) d'injection et la deuxième borne (C) de sortie et qui, dans l'état ouvert, sépare électriquement l'une de l'autre la borne (A) d'injection et la deuxième borne (C) de sortie,
- la source (20) de tension longitudinale a un troisième interrupteur (S3), qui est monté électriquement en série avec l'accumulateur (21) d'énergie et qui forme avec celui-ci un circuit série, qui est monté électriquement entre les deux bornes (B, C) de sortie, et
- le dispositif (30) d'inversion de polarité est monté entre les deux bornes (B, C) de sortie de la source (20) de tension longitudinale et deux contacts (30a, 30b) conducteur de connexion du dispositif (30) d'inversion de polarité, dans lequel le dispositif (30) d'inversion de polarité relie, dans une première position, la première borne (B) de sortie au premier contact (30a) conducteur de connexion et la deuxième borne (C) de sortie au deuxième contact (30b) conducteur de connexion et dans lequel le dispositif (30) d'inversion de polarité relie, dans une deuxième position, la première borne (B) de sortie au deuxième contact (30b) conducteur de connexion et la deuxième borne (C) de sortie au premier contact (30a) conducteur de connexion.

2. Montage suivant la revendication 1,
**caractérisé en ce que**
la source (20) de tension longitudinale a un dispositif (22) de commande, qui
- dans un premier état de fonctionnement, fait fonctionner, à l'état fermé, le premier et le troisième interrupteurs (S2, S3) et, à l'état ouvert, le deuxième interrupteur (S2) et monte ainsi l'accumulateur (21) d'énergie entre la borne (A) d'injection et la deuxième borne (C) de sortie,
- dans un deuxième état de fonctionnement, fait fonctionner, à l'état fermé, le deuxième et le troisième interrupteurs (S1, S3) et, à l'état ouvert, le premier interrupteur (S1) et monte ainsi l'accumulateur (21) d'énergie entre la borne (A) d'injection et la première borne (B) de sortie, et
- dans un troisième état de fonctionnement, fait fonctionner, à l'état fermé, le premier et le deuxième interrupteurs (S1, S2) et, à l'état ouvert, le troisième interrupteur (S3) et sépare ainsi l'accumulateur (21) d'énergie de la borne (A) d'injection.

3. Montage suivant la revendication 2,
**caractérisé en ce que**
le dispositif (22) de commande est conformé de manière à effectuer un passage du premier état de fonctionnement au deuxième état de fonctionnement ou inversement avec le troisième état de fonctionnement comme état intermédiaire.

4. Montage suivant l'une des revendications précédentes,
**caractérisé en ce que**
le premier, deuxième et troisième interrupteurs (S1, S2, S3) sont des interrupteurs à semiconducteur pouvant être commandés de manière unipolaire.

5. Montage suivant l'une des revendications précédentes,
**caractérisé en ce que**
le premier, deuxième et troisième interrupteurs (S1, S2, S3) sont des interrupteurs à semiconducteur pouvant être commandés de manière bipolaire.

6. Montage suivant l'une des revendications précédentes,
**caractérisé en ce que**
le premier interrupteur (S1) ou le deuxième interrupteurs (S2) sont formés par une soupape, qui ne peut pas être commandée, notamment seulement par une diode (D).

7. Montage suivant l'une des revendications précédentes,
**caractérisé en ce que**
le dispositif (30) d'inversion de polarité a des interrupteurs (31 - 34) mécaniques ou est formé d'interrupteurs (31 - 34) mécaniques.

8. Système (10) de transport de courant continu,
**caractérisé en ce qu'**
il a au moins un montage suivant l'une des revendications précédentes ainsi qu'une première et une deuxième lignes (12, 13) de transport de courant continu de haute tension.

9. Système (10) de transport de courant continu suivant la revendication 8,
**caractérisé en ce que**
- la source (20) de tension longitudinale est connectée par sa première borne (B) de sortie à la première ligne (12) de transport de courant continu de haute tension et par sa deuxième borne (C) de sortie à la deuxième ligne (13) de transport de courant continu de haute tension.

10. Système (10) de transport de courant continu suivant la revendication 8 ou 9,
**caractérisé en ce que**
- le système (10) de transport de courant continu a une première et une deuxième sources (20) de tension longitudinale,
- la première source (20) de tension longitudinale est connectée par sa première borne (B) de sortie à la première ligne (12) de courant continu de haute tension et par sa deuxième borne (C) de sortie à la deuxième ligne (13) de transport de courant continu de haute tension et
- la deuxième source (20) de tension longitudinale est connectée par sa première borne (B) de sortie à la deuxième ligne (13) de transport de courant continu de haute tension et par sa deuxième borne (C) de sortie à la première ligne (12) de transport de courant continu de haute tension.

11. Système (10) de transport de courant continu suivant la revendication 10,
**caractérisé en ce que**
chacune des deux sources (20) de tension longitudinale permet respectivement un état de fonctionnement, dans lequel le premier et le deuxième et le troisième interrupteurs (S1 - S3) de la source (20) respective de tension longitudinale sont ouverts.

12. Système (10) de transport de courant continu suivant la revendication 10 ou 11,
**caractérisé en ce que**
chacune des deux sources (20) de tension longitudinale a respectivement un interrupteur de fonctionnement, qui est monté en série avec la borne d'entrée et qui peut bloquer un flux de courant passant par la borne d'entrée.

13. Système (10) de transport de courant continu suivant l'une des revendications 8 à 12 précédentes,
**caractérisé en ce que**
la source (20) de tension longitudinale est connectée par son premier contact (30a) conducteur de connexion à la première ligne (12) de transport de courant continu de haute tension et par son deuxième contact (30b) conducteur de connexion à la deuxième ligne (13) de transport de courant continu de haute tension.

14. Procédé pour faire fonctionner un montage ayant une source (20) de tension longitudinale commutable et un dispositif (30) d'inversion de polarité, dans lequel
on fait fonctionner, comme montage, un montage ayant les caractéristiques suivant l'une des revendications 1 à 7,
- dans lequel on met la source (20) de tension longitudinale pour le montage de l'accumulateur (21) d'énergie entre la borne (A) d'injection et la deuxième borne (C) de sortie, dans un premier état de fonctionnement, dans lequel on ferme le premier et le troisième interrupteurs (S1 , S3) et on ouvre le deuxième interrupteur (S2),
- dans lequel on met la source (20) de tension longitudinale, pour le montage de l'accumulateur (21) d'énergie entre la borne (A) d'injection et la première borne (B) de sortie dans un deuxième état de fonctionnement, dans lequel on ferme le deuxième et le troisième interrupteurs (S2, S3) et on ouvre le premier interrupteur (S1), et
- dans lequel on met la source (20) de tension intermédiaire pour la séparation de l'accumulateur (21) d'énergie de la borne (A) d'injection dans un troisième état de fonctionnement, dans lequel on ferme le premier et le deuxième interrupteurs (S1, S2) et on ouvre le troisième interrupteur (S3) .
